# NEW EUROPEAN PATENT SPECIFICATION

(11) **EP 1 159 341 B2**
(45) Date of publication and mention of the opposition decision: **23.08.2006**
(45) Mention of the grant of the patent: 20.08.2003
(21) Application number: 99966430.3
(22) Date of filing: 17.12.1999
(51) Int. Cl.: C08J 9/00, C08K 5/52, C08K 3/04, C08G 18/48, C08G 18/50

(54) **POLYURETHANE BASED FOAM CONTAINING EXFOLIATING GRAPHITE AND THE PROCESS FOR THE PREPARATION THEREOF**
AUF POLYURETHAN BASIERENDER UND EXPANDIERBAREN GRAPHIT ENTHALTENDER SCHAUM SOWIE VERFAHREN ZU DESSEN HERSTELLUNG
MOUSSE A BASE DE POLYURETHANNE CONTENANT DU GRAPHITE EXFOLIE ET PROCESSUS DE PREPARATION CORRESPONDANT

(30) Priority: 18.12.1998 US 112780 P
(43) Date of publication of application: 05.12.2001
(73) Proprietor: DOW GLOBAL TECHNOLOGIES INC., Midland, Michigan 48674 (US)
(72) Inventor: DE VOS, Hans A. G., NL-4533 BH Terneuzen (NL)
(74) Representative: Dey, Michael
(86) International application number: PCT/US1999/030242
(87) International publication number: WO 2000/035999

(56) References cited:
- EP-A- 0 482 507
- DE-A- 2 832 253
- DE-A- 3 812 348
- DE-A- 19 702 760
- GB-A- 1 404 822
- GB-A- 2 291 065
- US-A- 4 002 580
- US-A- 4 407 981
- US-A- 5 173 515
- US-A- 5 654 344
- Kunststoffhandbuch Band 7 "Polyurethane", Kapitel 3.4.6, Hrsg.G.Oertel, Carl Hanser Verlag, 1993.

## Description

This invention relates to rigid foam compositions and methods for preparing such compositions. More particularly, the present invention relates to a combination of flame retardants to produce a rigid foam having enhanced flame retardation properties.

Legislation has been enacted in many countries setting standards for flame retardation of materials used in building construction. For example, polyurethane foams for building construction to meet the Norme Francaise NF P 92-501, class M1 (M1 test) in France and the German norm DIN-4102 Teil 1, Mai 1981, baustoffklasse B1 in Germany (B1 test). To provide the required level of flame retardation to a foam, a number of approaches have been used.

One approach to provide flame retardation in rigid foams is to include melamine in relatively large amounts. U.S. Patent 4,221,875 describes rigid polyurethane foams which include melamine powder in an amount of between 20 and 100 parts per hundred parts of the polyhydroxyl compound. European Patent Publication 0239891 describes rigid polyurethanes containing an alkylene oxide adduct of toluenediamine or diaminodiphenylmethane with an organic polyisocyanate where melamine is incorporated as the sole flame retardant compound in an amount of at least 5 percent by weight of the total composition.

In the flexible foam area, expandable (exfoliating) graphite is reported as providing flame retardant properties to the foam. For example, U.S. Patents 4,698,369 and 5,023,280 disclose the use of graphite in flexible polyurethanes. In flexible foams, graphite is also used in combination with other flame retardants. U.S. Patent 5,192,811 describes the use of graphite together with melamine and the combination of flame retardants is reported to reduce smoldering or subsequent incandescence of the foam. U.S. Patent 5,173,515 discloses the use of graphite in a fire retardant element which can be added to foams where the fire retardant element comprises graphite, one or more phosphorous containing polyols, and amine salts.

Despite the abundance of disclosed processes to obtain flame retardant foams, there continues to be a need to improve the flame retardant properties of foams. Accordingly it is an object of the present invention to provide a process for preparing a flame-retardant rigid foam and/or panel which offers enhanced performance in severe flame tests such as the M1 and B1 tests.

In one aspect, the present invention is a process for producing a rigid polyurethane foam comprising reacting (1) a polyisocyanate, (2) a polyol, and (3) a halogenated reactive compound, in the presence of (4) a blowing agent, (5) a catalyst, (6) exfoliating graphite wherein the graphite is used in an amount to make up less than 10 percent by weight of the final foam, and (7) an additional flame retardant selected from phosphonate esters, phosphate esters, halogenated phosphate esters or a combination thereof.

In another aspect, the invention relates to a rigid flame-retardant polyurethane foam-forming composition comprising a polyisocyanate, a polyol, a halogenated polyol, exfoliating graphite wherein the graphite is used in an amount to make up less than 10 percent by weight of the final foam, and additional flame retardants selected from phosphonate esters, phosphate esters, halogenated phosphate esters or a combination thereof.

It has unexpectedly been found that flame retardant foams produced by the current process are capable of passing the M1 and B1 tests mentioned above as well as a number of other stringent tests such as the A1 test for Italy.

The flame retardation properties of the foams produced by the present process are the result of a unique combination offlame retardation agents which act synergistically to give enhanced flame retardation. This is particularly surprising in that a small amount of exfoliating graphite added to a polyurethane foam, containing as fire retardants, a reactive halogenated polyol and a phosphate ester, phosphonate esters, halogenated phosphate esters or a combination thereof, produces a foam capable of passing the stringent M1 test. This improvement in fire retardation is obtained without an adverse affect on the foam properties.

As indicated, an essential flame retardation component used in the present invention is exfoliating graphite. Exfoliating graphite is graphite containing one or more exfoliating agents such that considerable expansion occurs upon exposure to heat. Exfoliating graphite is prepared by procedures known in the art and generally graphite is first modified with oxidants, such as nitrates, chromates, peroxides, or by electrolysis to open the crystal layer and then nitrates or sulfates are intercalated within the graphite.

Based on the combination of flame retardants disclosed herein, it is possible to use low levels of graphite in the foam-forming reaction mixture. The levels of exfoliating graphite are chosen such that the final foam will pass the M1 test. Generally the amount will be at least 0.5 percent by weight of the final foam. Advantageously, the amount of graphite used will make up at least 1 percent by weight of the final foam. More preferred are foams which contain at least 2 percent by weight of graphite. There is no limit on the maximum amount of graphite that can be used, however; due to the particulate nature of the graphite and the increase in viscosity of a polyol containing graphite, for ease of handling the graphite is used in an amount to make up less than ten percent by weight of the final foam. Preferably the amount of graphite is less than 9 weight percent of the final foam. More preferably, the graphite is less than 6.5 percent by weight of the final foam. Most preferred are foams containing 5 percent or less by weight of graphite.

A second flame retardant used in the present invention is a reactive halogenated compound. Such compounds are referred to as reactive as they generally become part of the polymer. These reactive compounds generally contain halogen moieties and further contain one or more reactive groups, such as -OH or-COOH, which is capable of reacting with an isocyanate moiety. Such compounds are known in the art and generally are halogenated polyols such as derivatives of phthalic acid, bisphenol A, an anhydride or an alcohol. For example, halogenated polyether-polyols are described in U.S. Patents 4,072,638, 4,067,911 and 4,173,710. Examples of such reactive halogenated compounds include, diester/ether diol of tetrabromophthalic anhydride, tetrabromobisphenol A, IXOL B251 (a halogenated polyether polyol available from Solvay S.A.), tetrabromobisphenol A-bis(ally ether), tetrabromobisphenol A-bis(2-hydroxyethyl ether); tribromophenylmaleimide, tetrabromophthalate, dibromopentylglycol, tetrabromodipentaerythritol, tetrabromophthalic anhydride, dibromopropanol, chlorendic acid and tetrachlorophthalic anhydride. Preferably the halogen is bromine.

The amount of the reactive halogenated compound used in the present invention is generally less than 50 percent of the total polyol component of the foam mixture. Preferably the reactive halogenated compound is less than 40 percent of the total polyol component and more preferably 30 percent by weight or less of the total polyol component. It is generally known in the art that polyurethane foams can be produced which pass the M1 test when using a halogenated polyol where the halogenated polyol comprises greater than 70 percent or greater of the polyol present. As the halogenated polyols are generally more expensive than conventional polyols and are more difficult to handle during processing, the reduction in the amount of halogenated polyol required in the present invention reduces the overall cost of the foam components and is easier to process.

Additional flame retardants used in the present invention are selected from phosphonate esters, phosphate esters, halogenated phosphate esters or a combination thereof.

Phosphonate esters for use in the present invention can be represented by the formula R-P(O)(OR')(OR") where R, R' and R" are each independently an alkane with 1 to 4 carbon atoms. Preferred members of this group are dimethyl methylphosphonate (DMMP) and diethyl ethylphosphonate (DEEP).

Phosphate esters which can be used in the present invention are trialkyl phosphates, such as triethyl phosphate, and tricresyl phosphate.

When used, the phosphonate or phosphate ester flame retardants are present in the final foam at a level of from 0.5 to 10 percent by weight of the final foam. Preferably they are 1 to 8.5 percent by weight of the final foam. More preferably they constitute 2 to 6.5 percent by weight of the final foam.

Halogenated phosphate esters which are associated with fire retardation are known in the art and can be represented by the general formula P(O)(OR'X'ₙ)(OR"X"ₙ)(OR"'X"'ₙ), where R', R''' and R"' are each independently an alkane with 1 to 4 carbon atoms, X', X" and X"' are each independently a halogen and n is an integer from 1 to 3.

Examples of halogenated phosphate esters include 2-chloroethanol phosphate (C₆H₁₂Cl₂O₄P); 1-chloro-2-propanol phosphate [tris(1-chloro-2-propyl) phosphate] (C₉H₁₈Cl₃O₄P) (TCPP); 1,3-Dichloro-2-Propanol Phosphate (C₉H₁₅Cl₆O₄P) also called tris(1,3-dichloro-2-propyl) phosphate; tri(2-chloroethyl) phosphate; tri (2,2-dichloroisopropyl) phosphate; tri (2,3-dibromopropyl) phosphate; tri(1,3-dichloropropyl)phosphate; tetrakis(2-chloroethyl)ethylene diphosphate; bis(2-chloroethyl) 2-chloroethylphosphonate; diphosphates [2-chloroethyl diphosphate]; tetrakis(2-chloroethyl) ethylenediphosphate; tris-(2-chloroethyl)-phosphate, tris-(2-chloropropyl)phosphate, tris-(2,3-dibromopropyl)-phosphate, tris(1,3-dichloropropyl)phosphate tetrakis (2-chloroethyl-ethylene diphosphate and tetrakis(2-chloroethyl) ethyleneoxyethylenediphosphate.

Tribromoneopentyl chloroalkyl phosphates as disclosed in EP 0 735 039 having the formula ((BrCH₂)₃C-CH₂)]ₘPO(OCYHCH₂Cl)₃₋ₘ where Y represents a hydrogen, an alkyl, having 1 to 3 carbon atoms, or chloroalkyl group and m is from 0.95 to 1.15 may also be used.

When used as a flame retardant, the halogenated phosphate ester will comprise at least 1 percent by weight of the final foam, preferably at least 2 percent by weight of the final foam and more preferably at least 4.5 percent by weight of the final foam. The halogenated phosphate ester generally does not exceed 9 percent by weight of the final foam, preferably 8 percent or less of the final foam and more preferably less than 6.5 percent by weight of the foam.

In a preferred embodiment of the present invention, the flame retardants used to produce the rigid foams of the present invention include the use of exfoliating graphite, a halogenated reactive polyol and a combination of a phosphonate ester or phosphate ester and halogenated phosphate ester.

The polyisocyanates, polyols, catalyst and blowing agent for producing the rigid foams of the present invention are those that are well known and commonly used in the art.

Polyisocyanates useful in making polyurethanes include aliphatic and cycloaliphatic and preferably aromatic polyisocyanates or combinations thereof, advantageously having an average of from 2 to 3.5, and preferably from 2.4 to 3.2 isocyanate groups per molecule. A crude polyisocyanate may also be used in the practice of this invention, such as crude toluene diisocyanate obtained by the phosgenation of a mixture of toluene diamine or the crude diphenylmethanediisocyanate obtained by the phosgenation of crude methylene diphenylamine. The preferred polyisocyanates are aromatic polyisocyanates such as disclosed in U.S. Patent 3,215,652. Especially preferred are methylene-bridged polyphenyl polyisocyanates and mixtures thereof with crude diphenylmethane diisocyanate, due to their ability to crosslink the polyurethane.

The amount of polyisocyanate present when preparing the polyurethane foam is such to provide from 0.6 to 3.0 isocyanate groups per isocyanate reactive atom present in the polyol(s) and any water that may be present. Preferably the amount of isocyanate is such to provide from 0.7 to 2 isocyanate groups per isocyanate reactive atom present in the polyol(s) and any water that may be present. More preferably the amount of isocyanate is from 0.8 to 1.6 isocyanate groups per isocyanate reactive atom present in the polyol(s) and any water that may be present. When the same ratio is expressed as a multiple of 100 this is then called the isocyanate index.

Polyols which are useful in the preparation of the polyisocyanate-based cellular polymers include those materials having two or more groups containing an active hydrogen atom capable of undergoing reaction with an isocyanate. Preferred among such compounds are materials having at least two hydroxyl, primary or secondary amine, carboxylic acid, or thiol groups per molecule. Compounds having at least two hydroxyl groups per molecule, are especially preferred due to their desirable reactivity with polyisocyanates. Typically polyols suitable for preparing rigid polyurethanes include those having an equivalent weight of 30 to 700, preferably 70 to 300 and more preferably 70 to 150. Such polyols also advantageously have a functionality of at least 2, preferably 3, and up to 6, preferably up to 8, active hydrogen atoms per molecule. Representative of polyols include polyether polyols, polyester polyols, polyhydroxy-terminated acetal resins, hydroxyl-terminated amines and polyamines. Examples of these and other suitable isocyanate-reactive materials are described more fully in U.S. Patent 4,394,491. Preferred for preparing rigid foams, on the basis of performance, availability and cost, is a polyol prepared by adding an alkylene oxide to an initiator having from 2 to 8, preferably 3 to 8 active hydrogen atoms. Exemplary such polyols include those commercially available under the trademark designation VORANOL including VORANOL 280, VORANOL 360, VORANOL 370, VORANOL 446, VORANOL 490, VORANOL 575, VORANOL 800, all sold by The Dow Chemical Company. Other highly preferred polyols include alkylene oxide derivatives of Mannich condensates, as disclosed, for example, in U.S. Patents 3,297,597; 4,137,265 and 4,383,102; and aminoalkylpiperazine-initiated polyethers as described in U.S. Patents 4,704,410 and 4,704,411.

In a preferred embodiment of this invention, the polyol is a composition comprising a sugar-initiated (such as sucrose) polyether polyol in from 30 to 90 parts per 100 parts by total weight of the polyol composition. Further to the sugar-initiated polyether polyol, the composition may also comprise a sorbitol initiated polyol, an amine-initiated polyether polyol and a water-initiated polyether polyol, each in from 3 to 35 parts per 100 parts by total weight of the polyol composition. In a highly preferred embodiment of this invention, the polyahl composition contains a sugar-initiated polyol from 30 to 90 parts; a sorbital-initiated polyol from 3 to 35 parts, an amine-initiated polyether polyol from 3 to 35 parts; a water-initiated polyol from 5 to 35 parts; and a halogenated reactive polyol from 20 to 40 part per 100 parts by total weight of the polyol composition.

Due to the fire retardant properties associated with aromatic-initiated polyols, in another preferred embodiment the polyol used contains an aromatic-initiated polyether polyol in from 20 to 70 parts per 100 parts by total weight of the polyol compositions. In addition to the polyols described above, the composition may also contain an amine-initiated polyether polyol in from 5 to 35 parts per 100 parts by total weight of the composition; or alternatively an aromatic polyester polyol, liquid at room temperature, in from 5 to 35 parts per 100 parts by total weight of the composition. Advantageously, the aromatic-initiated polyether polyol is an alkylene oxide adduct of a phenol/formaldehyde resin, frequently called a "novolac" polyol, such as disclosed in U.S. Patents 3,470,118 and 4,046,721, or an alkylene oxide adduct of phenol/formaldehyde/alkanolamine resin, frequently called a "Mannich" polyol such as disclosed in U.S. Patents 4,883,826; 4,939,182; and 5,120,815.

When preparing a rigid foam, there is present a blowing agent. The blowing agent is present in an amount to provide the foam with the desired overall density. Typically a density of 25 to 60, preferably from 30 to 55 and more preferably from 35 to 50 kg/m³ is desired.

Generally, as the rigid foams of this invention are predominantly closed-celled, it is preferred that a halocarbon blowing agent constitutes the major proportion of the blowing agent due to the additionally thermal insulating properties such blowing agents provided. Such blowing agents can be fully or partially halogenated aliphatic hydrocarbons and include fluorocarbons, chlorocarbons, and chlorofluorocarbons. Examples of fluorocarbons include methyl fluoride, perfluoromethane, ethyl fluoride, 1,1-difluoroethane, 1,1,1-trifluoroethane (HFC-143a), 1,1,1,2-tetrafluoro-ethane (HFC-134a), pentafluoroethane, difluoromethane, perfluoroethane, 2,2-difluoropropane, 1,1,1-trifluoropropane, perfluoropropane, dichloropropane, difluoropropane, perfluorobutane, perfluorocyclobutane.

Partially halogenated chlorocarbons and chlorofluorocarbons for use in this invention include methyl chloride, methylene chloride, ethyl chloride, 1,1,1-trichloroethane, 1,1-dichloro-1-fluoroethane (FCFC-141b), 1-chloro-1,1-difluoroethane (HCFC-142b), 1,1-dichloro-2,2,2-trifluoroethane (HCHC-123) and 1-chloro-1,2,2,2-tetrafluoroethane (HCFC-124).

Fully halogenated chlorofluorocarbons include trichloromonofluoromethane (CFC-11) dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, and dichlorohexafluoropropane. The halocarbon blowing agents may be used in conjunction with low-boiling hydrocarbons such as butane, pentane (including the isomers thereof), hexane, or cyclohexane or with water.

When water is present as an additional blowing agent, it is generally present in an amount from 0.5 to 10, preferably from 0.8 to 6 and more preferably from 1 to 4 and most preferably from 1 to 3 parts by total weight of the total polyol composition. Water acts as a blowing agent as water reacts with isocyanate leading the production of carbon dioxide.

In addition to the foregoing critical components, it is often desirable to employ certain other ingredients in preparing cellular polymers. Among these additional ingredients are catalysts, surfactants, preservatives, colorants, antioxidants, reinforcing agents, stabilizers and fillers. In making polyurethane foam, it is generally highly preferred to employ a minor amount of a surfactant to stabilize the foaming reaction mixture until it cures. Such surfactants advantageously comprise a liquid or solid organosilicone surfactant. Other, less preferred surfactants include polyethylene glycol ethers of long-chain alcohols, tertiary amine or alkanolamine salts of long-chain alkyl acid sulfate esters, alkyl sulfonic esters and alkyl arylsulfonic acids. Such surfactants are employed in amounts sufficient to stabilize the foaming reaction mixture against collapse and the formation of large, uneven cells. Typically, 0.2 to 3 parts of the surfactant per 100 parts by weight polyahl are sufficient for this purpose.

One or more catalysts for the reaction of the polyol (and water, if present) with the polyisocyanate are advantageously used. Any suitable urethane catalyst may be used, including tertiary amine compounds and organometallic compounds. Exemplary tertiary amine compounds include triethylenediamine, N-methylmorpholine, N,N-dimethylcyclohexylamine, pentamethyldiethylenetriamine, tetramethylethylenediamine, 1-methyl-4-dimethylaminoethylpiperazine, 3-methoxy-N-dimethylpropylamine, N-ethylmorpholine, diethylethanolamine, N-cocomorpholine, N,N-dimethyl-N',N'-dimethyl isopropylpropylenediamine, N,N-diethyl-3-diethylaminopropylamine and dimethylbenzylamine. Exemplary organometallic catalysts include organomercury, organolead, organoferric and organotin catalysts, with organotin catalysts being preferred among these. Suitable tin catalysts include stannous chloride, tin salts of carboxylic adds such as dibutyltin di-laurate, as well as other organometallic compounds such as are disclosed in U.S. Patent 2,846,408. A catalyst for the trimerization of polyisocyanates, resulting in a polyisocyanurate, such as an alkali metal alkoxide may also optionally be employed herein. Such catalysts are used in an amount which measurably increases the rate of polyurethane or polyisocyanurate formation: Typical amounts are 0.001 to 3 parts of catalyst per 100 parts by weight of total polyol.

The rigid polyurethanes in accordance with the present invention are readily prepared according to standard procedures in the art which bring together under foam forming conditions the polyisocyanate, active hydrogen-containing material, the blowing agent and other foam-forming ingredients, including the exfoliating graphite and other flame retardants at a temperature of from 10°Cto 80°C. Any order of mixing is acceptable, and preferably the exfoliating graphite is homogeneously blended into the foam-forming formulation. In a preferred embodiment, the exfoliating graphite is homogeneously dispersed in the polyol component. The dispersion of exfoliating graphite in polyol may be added as a concentrate in the polyol composition by a separate line to the mix head.

In general, the rigid foams are produced by discontinuous or continuous processes, including what is regarded as the discontinuous panel process(DCPP) and double ban laminates (DBL), with the foaming reaction and subsequent curing being carried out in molds or on conveyors. When utilizing the foams in laminates, the facing may be flexible, for example, aluminum foil or coated paper, or may be made with a rigid material such as plaster-board, polyester facing or steal facing. Other processes to prepare construction foams are known as spray and block foams.

The rigid foam of the present invention are closed-cell foam. By closed-cells it is meant that at least 75 percent, preferably 80 percent or greater, and more preferably 85 percent or more of the cells are closed. In a preferred embodiment, 90 percent or more of the cells are closed. Because of the closed-cell structures, the rigid polyurethanes of the present invention are used for thermal insulation applications such as roofing, sheathing and *in-situ* spray applications.

The following examples are given to illustrate the invention and should not be interpreted as limiting it in anyway. Unless stated otherwise, all parts and percentages are given by weight.

### EXAMPLES

A description of the raw materials used in the examples is as follows:
- DEEP: was the flame retardant additive diethyl ethylphosphate
- TCPP: was the flame retardant additive tris(1-chloro-2-propyl) phosphate.
- TEGOSTAB B8462: was a silicone based surfactant available from Th. Goldschmidt Chemical Corporation.
- DMCHA: was JEFFCAT DMCHA, an N,N-dimethylcyclohexyl amine catalyst available from Huntsman Corporation.
- Niax DMEE: was an amine based catalyst available from OSI Specialties-Witco.
- Curithane 52: was an organic salt catalyst available from The Dow Chemical Company.
- Allocimene: was a UV (light) stabilizer available from Les Derives Resiniques & Terpeniques.
- VORANATE M220: was a polymeric isocyanate available from The Dow Chemical Company. (VORANATE is a Trademark of The Dow Chemical Company).

Exfoliating graphite utilized in the examples was S15-PU120 obtained from Ajay Metachem, India.
- Polyol A: VORANOL* RN490, a glycerin/sucrose-initiated polyoxypropylene polyether polyol having a hydroxyl number of 490 and an equivalent weight of 114, available from The Dow Chemical Company.
- Polyol B: VORANOL RN482, a sorbitol-initiated polyoxypropylene polyether polyol having a hydroxyl number of 482 and an average equivalent weight of 117, available from The Dow Chemical Company.
- Polyol C: VORANOL RA640, an ethylene diamine-initiated polyoxypropylene polyol with a hydroxyl number of 640 and an average equivalent weight of 88, available from The Dow Chemical Company.
- Polyol D: VORANOL P1010, was a water-initiated polyoxypropylene polyether polyol having a hydroxyl number of 110 and an average equivalent weight of 510, available from The Dow Chemical Company
- Saytex RB-79: was a diether diol of tetrabromophtalate anhydride available from Ethyl Corp.

A base polyol blend was prepared by mixing the following, given in parts by weight: 30.5 polyol A; 5 polyol B; 4 polyol C; 6.7 polyol D; 18 Syatex RB-79; 10 DEEP; 12.6 TCPP; 1.2 Tegostab B 8462; 2.1 water; 0.7 DMCHA; 0.5 Niax DMEE; 0.6 Curithane 52 and 0.1 allocimene.

To a beaker were added the base polyol, graphite and the blowing agent followed by gentle stirring. The amount of blowing agent was adjusted to correct for evaporation and then the isocyanate was added. The mixture was then stirred for 10 seconds at 3000 rmp before pouring the mixture in a preheated mold at 60°C. A steel facing (30 by 40 mm) was present in the mold onto which the mixture was poured. After 45 minutes, the sample was demolded. The samples were left overnight and then cut for testing. The characteristic of the foam in the presence of different amounts of graphite is given in Table I.

**TABLE I**

| | Control | Example 1 | Example 2 | COMPARATIVE |
|---|---|---|---|---|
| Base^{(a)} polyol | 600 | 600 | 600 | 600 |
| R-141b blowing agent | 35 | 41 | 48 | 54 |
| graphite | | 60 | 120 | 180 |
| VORANATE^{™} M220 | 600 | 600 | 600 | 600 |
| | | | | |
| Index | 110 | 110 | 110 | 110 |
| cream time(s) | 20 | 20 | 20 | 20 |
| geltime(s) | 80 | 80 | 83 | 88 |
| TFT | 155 | 155 | 155 | 162 |
| | | | | |
| density (kg/m3) | 38.8 | 39.5 | 39.5 | 39.7 |
| lambda (mW/m.K) | 23.3 | 23.3 | 23.3 | 22.6 |
| C.Str (kPa) parr | 123 | 160 | 170 | 140 |
| perp | 119 | 138 | 121 | 100 |
| closed-cell (%) | 86 | 92 | 93 | 94 |
| B2 (cm) | 15.5 fail | 5.0 pass | 4.0 pass | 4.0 pass |
| M1 (Q-value) | 6.8 fail | 0 pass pass | 0 pass 0 pass | 0 pass 0 pass |

| | | | | |
|---|---|---|---|---|
| ^{(a)} Values for polyol, blowing agent, graphite and polyoisocayanate are in grams. | | | | |

For passing the B2 test, a flame of less than 15 cm was required. To pass the M1, a value of less than 2.5 was required.

The results show that adding 4.6 percent by weight of graphite to the total foam composition allowed the produced foam to pass both the B2 and M1 tests. The results with the low addition of exfoliating graphite show the flame retardation properties of the foam were similar to those obtained when 30 parts by weight of exfoliating graphite were added to the polyol formulation. Formulations which contain the added graphite but do not contain the reactive halogenated compound or the phosphonate or phosphate ester or a chlorinated phosphate ester produced a foam which failed the M1 test.

It was within the skill in the art to practice this invention in numerous modifications and variations in light of the above teachings. It was, therefore, to have been understood that the various embodiments of this invention described herein may have been altered without departing from the spirit and scope of this invention as defined by the appended claims.

## Claims

1. A process for producing a rigid polyurethane foam comprising reacting
(1) a polyisocyanate,
(2) a polyol, and
(3) a halogenated reactive compound being a halogenated polyol in the presence of
(4) a blowing agent,
(5) a catalyst,
(6) exfoliating graphite, wherein the graphite is used in an amount to make up less than 10 percent by weight of the final foam, and
(7) an additional flame retardant selected from phosphonate esters, phosphate esters, halogenated phosphate esters or a combination thereof.

2. The process of claim 1 wherein the foam is a closed-cell rigid polyurethane foam.

3. The process of claim 2, wherein the halogenated reactive compound is a halogenated polyol and is less than 50 percent by weight, preferably less than 30 percent by weight, of the total polyol.

4. The process of any of the preceding claims wherein the polyol (2) is a polyether polyol.

5. The process of any of one of claims 1 through 3 wherein the polyol (2) is a polyester polyol.

6. The process of claim 4 or 5 wherein the polyol is an aromatic polyol.

7. The process of claim 6 wherein the polyol has a molecular weight of 400 to 2000 and a functionality of 2 to 8.

8. The process of claim 1 wherein the additional flame retardants (7) are present in an amount to comprise from 1 to 20 weight percent of the final foam.

9. The process of claim 8 wherein the additional flame retardants contain at least one phosphonate ester and at least one halogenated phosphate ester.

10. The process of claim 9 wherein the phosphonate ester and halogenated phosphate ester are each present in an amount to comprise from 0.5 to 10 percent by weight or the final foam.

11. The process of claim 10 wherein the phosphonate ester is present in an amount to comprise from 1 to 8.5 percent by weight of the final foam and the halogenated phosphate ester is present in an amount to comprise from 2 to 8 percent by weight of the final foam.

12. The process of claim 1 wherein the graphite is present in an amount to comprise at least 0.5 percent by weight of the final foam.

13. A rigid flame retardant polyurethane foam-forming composition comprising a polyisocyanate, a polyol, a halogenated polyol, exfoliating graphite, wherein the graphite is used in an amount to make up less than 10 percent by weight of the final foam, and additional flame retardants selected from phosphonate esters, phosphate esters, halogenated phosphate esters or a combination thereof.

14. The composition of claim 13 wherein the halogenated polyol comprises less than 50 percent of the total polyol present.

15. The composition of claim 13 or 14 wherein the graphite comprises at least 2 percent by weight of the composition.

16. The composition of claim 15 wherein the composition contains from 2 to 10 percent by weight of a phosphonate ester and 2 to 10 percent by weight of a halogenated phosphate ester.

17. A rigid polyurethane foam formed from the composition of claim 16.

18. The rigid polyurethane foam formed by the process of any one of claims 1 through 12.

## Patentansprüche

1. Verfahren zur Herstellung eines Polyurethan-Hartschaumes, umfassend das Umsetzen
(1) eines Polyisocyanats,
(2) eines Polyols, und
(3) einer halogenierten reaktiven Verbindung, die ein halogeniertes Polyol ist, in Gegenwart
(4) eines Treibmittels,
(5) eines Katalysators,
(6) von Blähgraphit, wobei der Graphit in einer Menge verwendet wird, welche weniger als 10 Gewichtsprozent des Endschaums beträgt, und
(7) eines zusätzlichen Flammschutzmittels, das ausgewählt ist aus Phosphonatestern, Phosphatestern, halogenierten Phosphatestern oder einer Kombination davon.

2. Verfahren nach Anspruch 1, wobei der Schaum ein geschlossenzelliger Polyurethan-Hartschaum ist.

3. Verfahren nach Anspruch 2, wobei die halogenierte reaktive Verbindung ein halogeniertes Polyol ist und weniger als 50 Gew.-%, vorzugsweise weniger als 30 Gew.-% des gesamten Polyols ausmacht.

4. Verfahren nach einem der vorhergehenden Ansprüche, wobei das Polyol (2) ein Polyetherpolyol ist.

5. Verfahren nach einem der Anspruche 1 bis 3, wobei das Polyol (2) ein Polyesterpolyol ist.

6. Verfahren nach Anspruch 4 oder 5, wobei das Polyol ein aromatisches Polyol ist.

7. Verfahren nach Anspruch 6, wobei das Polyol ein Molekulargewicht von 400 bis 2000 und eine Funktionalität von 2 bis 8 besitzt.

8. Verfahren nach Anspruch 1, wobei die zusätzlichen Flammschutzmittel (7) in einer solchen Menge vorhanden sind, dass sie 1 bis 20 Gew.-% des Endschaums ausmachen.

9. Verfahren nach Anspruch 8, wobei die zusätzlichen Flammschutzmittel mindestens einen Phosphonatester und mindestens einen halogenierten Phosphatester enthalten.

10. Verfahren nach Anspruch 9, wobei der Phosphonatester und der halogenierte Phosphatester jeweils in einer solchen Menge vorhanden sind, dass sie 0,5 bis 10 Gew.-% des Endschaums ausmachen.

11. Verfahren nach Anspruch 10, wobei der Phosphonatester in einer solchen Menge vorhanden ist, dass er 1 bis 8,5 Gew.-% des Endschaums ausmacht, und der halogenierte Phosphatester in einer solchen Menge vorhanden ist, dass er 2 bis 8 Gew.-% des Endschaums ausmacht.

12. Verfahren nach Anspruch 1, wobei der Graphit in einer solchen Menge vorhanden ist, dass er mindestens 0,5 Gew.-% des Endschaums ausmacht.

13. Flammenhemmenden Polyurethan-Hartschaum bildende Zusammensetzung, umfassend ein Polyisocyanat, ein Polyol, ein halogeniertes Polyol, Blähgraphit, wobei der Graphit in einer Menge verwendet wird, welche weniger als 10 Gewichtsprozent des Endschaums beträgt und zusätzliche Flammschutzmittel, die ausgewählt sind aus Phosphonatestern, Phosphatestern, halogenierten Phosphatestern oder einer Kombination davon.

14. Zusammensetzung nach Anspruch 13, wobei das halogenierte Polyol weniger als 50 Prozent des gesamten vorhandenen Polyols ausmacht.

15. Zusammensetzung nach Anspruch 13 oder 14, wobei der Graphit mindestens 2 Gew.-% der Zusammensetzung ausmacht.

16. Zusammensetzung nach Anspruch 15, wobei die Zusammensetzung 2 bis 10 Gew.-% eines Phosphonatesters und 2 bis 10 Gew.-% eines halogenierten Phosphatesters enthält.

17. Polyurethan-Hartschaum, der aus der Zusammensetzung nach Anspruch 16 gebildet ist.

18. Polyurethan-Hartschaum, gebildet durch das Verfahren nach einem der Ansprüche 1 bis 12.

## Revendications

1. Procédé de production d'une mousse de polyuréthanne rigide comprenant le fait de faire réagir
(1) un polyisocyanate,
(2) un polyol, et
(3) un composé réactif halogéné qui est un polyol halogéné en présence de
(4) un agent de gonflement,
(5) un catalyseur,
(6) du graphite exfolié où le graphite est utilisé en quantité de moins de 10 % en poids de la mousse finale, et
(7) un ignifugeant supplémentaire sélectionné parmi les esters phosphonate, les esters phosphate, les esters phosphate halogénés ou une combinaison de ceux-ci.

2. Procédé selon la revendication 1, dans lequel la mousse est une mousse de polyuréthanne rigide à cellules fermées.

3. Procédé selon la revendication 2, dans lequel le composé réactif halogéné est un polyol halogéné et constitue moins de 50 pour cent en poids, de préférence moins de 30 pour cent en poids, du polyol total.

4. Procédé selon l'une quelconque des revendications précédentes, dans lequel le polyol (2) est un polyétherpolyol.

5. Procédé selon l'une quelconque des revendications 1 à 3, dans lequel le polyol (2) est un polyesterpolyol.

6. Procédé selon la revendication 4 ou 5, dans lequel le polyol est un polyol aromatique.

7. Procédé selon la revendication 6, dans lequel le polyol présente un poids moléculaire de 400 à 2 000 et une fonctionnalité de 2 à 8.

8. Procédé selon la revendication 1, dans lequel les ignifugeants supplémentaires (7) sont présents en une quantité constituant de 1 à 20 pour cent en poids de la mousse finale.

9. Procédé selon la revendication 8, dans lequel les ignifugeants supplémentaires contiennent au moins un ester phosphonate et au moins un ester phosphate halogéné.

10. Procédé selon la revendication 9, dans lequel l'ester phosphonate et l'ester phosphate halogéné sont chacun présents en une quantité constituant de 0,5 à 10 pour cent en poids de la mousse finale.

11. Procédé selon la revendication 10, dans lequel l'ester phosphonate est présent en une quantité constituant de 1 à 8,5 pour cent en poids de la mousse finale et l'ester phosphate halogéné est présent en une quantité constituant de 2 à 8 pour cent en poids de la mousse finale.

12. Procédé selon la revendication 1, dans lequel le graphite est présent en une quantité constituant au moins 0,5 pour cent en poids de la mousse finale.

13. Composition formant une mousse de polyuréthanne ignifuge rigide comprenant un polyisocyanate, un polyol, un polyol halogéné, du graphite exfolié où le graphite est utilisé en quantité de moins de 10 % en poids de la mousse finale et des ignifugeants supplémentaires sélectionnés parmi les esters phosphonate, les esters phosphate, les esters phosphate halogénés ou une combinaison de ceux-ci.

14. Composition selon la revendication 13, dans laquelle le polyol halogéné constitue moins de 50 pour cent du polyol total présent.

15. Composition selon la revendication 13 ou 14, dans laquelle le graphite constitue au moins 2 pour cent en poids de la composition.

16. Composition selon la revendication 15, dans laquelle la composition contient de 2 à 10 pour cent en poids d'un ester phosphonate et de 2 à 10 pour cent en poids d'un ester phosphate halogéné.

17. Mousse de polyuréthanne rigide formée à partir de la composition selon la revendication 16.

18. Mousse de polyuréthanne rigide formée par le procédé selon l'une quelconque des revendications 1 à 12.
